# EUROPÄISCHE PATENTSCHRIFT

(11) **EP 3 786 930 B1**
(45) Veröffentlichungstag und Bekanntmachung des Hinweises auf die Patenterteilung: **27.12.2023**
(21) Anmeldenummer: 19193663.2
(22) Anmeldetag: 27.08.2019
(51) Int. Cl.: G09F 21/04, G09F 13/04, B60Q 3/54, B60R 13/00, B60R 13/02, B60Q 3/41, B60Q 3/14, B60Q 3/64, B60Q 3/74, F21S 43/239, F21S 43/245

(54) **BELEUCHTUNGSVORRICHTUNG FÜR EIN ODER UMFASSEND EIN EXTERNES ODER INTERNES VERKLEIDUNGSBAUTEIL EINES PERSONEN- UND/ODER GÜTERTRANSPORTMITTELS, VERKLEIDUNGSBAUTEIL MIT EINER DERARTIGEN BELEUCHTUNGSVORRICHTUNG SOWIE PERSONEN- UND/ODER GÜTERTRANSPORTMITTEL, UMFASSEND ZUMINDEST EIN SOLCHES EXTERNES UND/ODER INTERNES VERKLEIDUNGSBAUTEIL**
LIGHTING DEVICE FOR OR COMPRISING AN EXTERNAL OR INTERNAL CLADDING COMPONENT OF A PASSENGER AND / OR GOODS TRANSPORT MEANS, CLADDING COMPONENT COMPRISING SUCH A LIGHTING DEVICE AND PASSENGER AND / OR GOODS TRANSPORT MEANS COMPRISING AT LEAST ONE SUCH EXTERNAL AND / OR INTERNAL CLADDING COMPONENT
DISPOSITIF D'ÉCLAIRAGE POUR UN COMPOSANT DE REVÊTEMENT OU COMPORTANT UN COMPOSANT DE REVÊTEMENT EXTERNE OU INTERNE D'UN MOYEN DE TRANSPORT DE PERSONNES ET / OU DE MARCHANDISES, COMPOSANT DE REVÊTEMENT DOTÉ D'UN TEL DISPOSITIF D'ÉCLAIRAGE AINSI QUE MOYEN DE TRANSPORT DES PERSONNES ET / OU DES MARCHANDISES COMPORTANT AU MOINS UN TEL COMPOSANT DE REVÊTEMENT EXTERNE OU INTERNE

(43) Veröffentlichungstag der Anmeldung: 03.03.2021
(73) Patentinhaber: Motherson Innovations Company Limited, London EC2N 2AX (GB)
(72) Erfinder: Sehn, Fabian, 79106 Freiburg (DE); Weingärtner, Torsten, 79108 Freiburg (DE)
(74) Vertreter: Westphal, Mussgnug & Partner Patentanwälte mbB

(56) Entgegenhaltungen:
- EP-A1- 2 676 841
- DE-A1-102004 009 925
- DE-A1-102010 031 938
- DE-U1-202009 003 968
- DE-U1-202018 104 438
- JP-A- S6 253 262
- JP-B2- 4 542 727

## Beschreibung

Die vorliegende Erfindung betrifft eine Beleuchtungsvorrichtung für ein externes oder internes Verkleidungsbauteil eines Personen- und/oder Gütertransportmittels. Zudem betrifft die Erfindung ein Verkleidungsbauteil mit einer derartigen Beleuchtungsvorrichtung sowie ein Personen- und/oder Gütertransportmittel, welches zumindest ein solches externes und/oder internes Verkleidungsbauteil umfasst.

Das Personen- und/oder Gütertransportmittel ist insbesondere als Kraftfahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personen- und/oder Gütertransportmittel wie Schiffe, Flugzeuge, Züge oder dergleichen.

Insbesondere bei Kraftfahrzeugen werden die Beleuchtungsvorrichtungen immer mehr zu einem prägenden Designelement, über welches eine markenspezifische Individualisierung gegenüber Kraftfahrzeugen eines anderen Herstellers möglich wird. Eine derartige Individualisierung kann beispielsweise mit speziellen, visuell wahrnehmbaren Mustern oder Logos erfolgen. Insbesondere die Markenlogos bieten sich als beleuchtetes Designelement besonders an. Derartige Muster und Logos lassen sich jedoch nur mit relativ hohem Aufwand bereitstellen, weshalb derartige Designelemente relativ selten und nur an einigen wenigen Bereichen eines Personen- und/oder Gütertransportmittels, insbesondere eines Kraftfahrzeugs eingesetzt werden. Derartige Beleuchtungsvorrichtungen sind aus der DE 20 2009 003 968 U1, DE 20 2018 104 438 U1, der JP 4 542 727 B2, der DE 10 2004 009 925 A1 und der EP 2 676 841 A1 bekannt.

Aufgabe einer Ausführungsform der vorliegenden Erfindung ist es, eine kompakte und vielseitig einsetzbare Beleuchtungsvorrichtung vorzuschlagen, mit welcher es mit einfachen und kostengünstigen Mitteln möglich ist, derartige Designelemente bereitzustellen.

Des Weiteren liegt einer Ausbildung der vorliegenden Erfindung die Aufgabe zugrunde, ein externes oder internes Verkleidungsbauteil bzw. ein Personen- und/oder Gütertransportmittel zu schaffen, welches mit einer derartigen Beleuchtungsvorrichtung ausgerüstet werden kann.

Diese Aufgabe wird mit den in den Ansprüchen 1, 6 und 7 angegebenen Merkmalen gelöst. Vorteilhafte Ausführungsformen sind Gegenstand der Unteransprüche.

Eine Ausführungsform der Erfindung betrifft eine Beleuchtungsvorrichtung für ein externes oder internes Verkleidungsbauteil eines Personen- und/oder Gütertransportmittels, umfassend
- ein in ein externes oder internes Verkleidungsbauteil eines Personen- und/oder Gütertransportmittels integriertes oder integrierbares oder das Verkleidungsbauteil bildendes Flächenelement, welches zumindest einen Abschnitt einer Sichtseite des Verkleidungsbauteils bildet und welches zumindest teilweise lichtdurchlässig ist,
- eine an einer der Sichtseite des Flächenelements gegenüberliegenden Rückseite angeordnete Trägerstruktur mit zumindest einer lichtreflektierenden Fläche,
- zumindest eine Lichtquelle zum Bereitstellen von Licht in der Beleuchtungsvorrichtung, wobei
   o die lichtreflektierende Fläche und die Lichtquelle so ausgebildet und angeordnet sind, dass das Licht von der lichtreflektierenden Fläche zum Flächenelement reflektiert wird und auf der Sichtseite visuell wahrnehmbar ist, und
- zumindest einen Muster-erzeugenden Abschnitt, der das Licht insbesondere hinsichtlich der Helligkeit und/oder der Farbe derart zum Flächenelement hin reflektiert, dass ein Muster auf der Sichtseite visuell wahrnehmbar ist, wobei
   o die lichtreflektierende Fläche auf dem Muster-erzeugenden Abschnitt angeordnet ist, oder
   o sich die lichtreflektierende Fläche auf den Muster-erzeugenden Abschnitt erstreckt, oder
   o der Muster-erzeugende Abschnitt keine lichtreflektierende Fläche aufweist und der Muster-erzeugende Abschnitt eine farbändernde Beschichtung zum Ändern der Farbe des reflektierten Lichts umfasst.

Die lichtlichtreflektierende Fläche dient dazu, dass das Licht zum Flächenelement hin reflektiert wird. Zumindest ein Teil des Lichts fällt direkt auf das Flächenelement. Der Teil des Lichts, der nicht direkt auf das Flächenelement fällt, würde ohne die lichtreflektierende Fläche zumindest weitgehend verloren gehen. Es bietet sich insbesondere aus fertigungstechnischen Gründen an, den Muster-erzeugenden Abschnitt auf der lichtreflektierenden Fläche anzuordnen, was aber nicht zwangsläufig so sein muss. Im einfachsten Fall können die Muster auf der Sichtseite durch Unterschiede in der Helligkeit erzeugt werden. Wie erwähnt, sorgt die lichtreflektierende Schicht dafür, möglichst viel Licht zur Sichtseite hin zu bringen, während der Muster-erzeugende Abschnitt so ausgebildet ist, dass im einfachsten Fall weniger Licht zur Sichtseite hin gebracht wird.

Die lichtreflektierende Fläche kann sich insbesondere dadurch auszeichnen, dass sie eine sehr glatte Oberfläche aufweist, so dass auf der Sichtseite ein besonders heller Abschnitt erzeugt wird, der sich gegenüber den übrigen Abschnitten entsprechend abhebt. Dadurch, dass die lichtreflektierende Fläche auf dem Muster-erzeugenden Abschnitt angeordnet ist oder sich auf diesen erstreckt, lässt sich die Beleuchtungsvorrichtung sehr kompakt ausführen.

Mit der vorschlagsgemäßen Beleuchtungsvorrichtung lassen sich auch komplexe Muster oder Logos auf vergleichsweise einfache Weise in Verkleidungsbauteile integrieren. Insbesondere ist es möglich, das flächige Element mit Wölbungen zu versehen, so dass die vorschlagsgemäße Beleuchtungsvorrichtung an einem beliebigen Bereich innerhalb des Personen- und/oder Gütertransportmittels eingesetzt werden kann, was bisher nicht oder nur mit unvertretbar großem Aufwand möglich war.

Nach Maßgabe einer weitergebildeten Ausführungsform umfasst der Muster-erzeugende Abschnitt eine lichtabsorbierende oder lichtstreuende Beschichtung. Die lichtabsorbierende Beschichtung kann auf sehr einfache Weise mit einer schwarzen oder zumindest dunklen Lackierung bereitgestellt werden. Zusätzlich oder alternativ ist es auch möglich, den Muster-erzeugenden Abschnitt mit einer lichtstreuenden Beschichtung zu versehen, die sich durch eine besonders raue Oberfläche auszeichnet. In beiden Fällen wird auf der Sichtseite ein dunkler Abschnitt erzeugt, der sich gegenüber dem übrigen Muster entsprechend abhebt.

Erfindungsgemäß umfasst der Muster-erzeugende Abschnitt eine farbändernde Beschichtung zum Ändern der Farbe des reflektierten Lichts, sofern der Muster-erzeugenden Abschnitt keine lichtreflektierende Fläche aufweist .

Bei einer weitergebildeten Ausführungsform kann der Muster-erzeugende Abschnitt eine farbändernde Beschichtung zum Ändern der Farbe des reflektierten Lichts umfassen, sofern die lichtreflektierende Fläche auf dem Muster-erzeugenden Abschnitt angeordnet ist oder sich auf den Muster-erzeugenden Abschnitt erstreckt.

Die farbändernde Beschichtung ist so aufgebaut, dass sie bestimmte Wellenlängenbereiche des sichtbaren Lichts stärker absorbiert als andere Wellenlängenbereiche. Insofern kann bei mehr oder weniger gleichbleibender Helligkeit ein Abschnitt auf der Sichtseite erzeugt werden, der sich hinsichtlich der Farbe von den übrigen Abschnitten abhebt.

Erfindungsgemäß ist der Muster-erzeugende Abschnitt auf einem Trägerelement angeordnet , welches mit der Trägerstruktur verbunden ist. Die verschiedenen Beschichtungen können direkt auf das Trägerelement aufgebracht werden, bevor das Trägerelement mit der Trägerstruktur der Beleuchtungsvorrichtung verbunden wird. Das Trägerelement kann aus einem Material bestehen, welches sich für das Auftragen der verschiedenen Beschichtungen besonders gut eignet. Es muss daher nicht die gesamte lichtreflektierende Fläche mit den verschiedenen Beschichtungen versehen werden. Vielmehr genügt es, nur das Trägerelement entsprechend zu Beschichten. Darüber hinaus kann das Trägerelement mit der übrigen lichtreflektierenden Fläche einen bestimmten Winkel einschließen, so dass allein hierdurch unterschiedlich helle Bereiche auf der Sichtseite erzeugen lassen.

Eine weitergebildete Ausführungsform zeichnet sich dadurch aus, dass die zumindest eine Lichtquelle an der Trägerstruktur befestigt ist. Generell kann die Lichtquelle beliebig angeordnet werden. Um das Licht zu der Beleuchtungsvorrichtung zu leiten, können beispielsweise Lichtleiter eingesetzt werden. Insofern ist es möglich, die Lichtquelle außerhalb der Beleuchtungsvorrichtung anzuordnen. Die Anordnung der Lichtquelle an der Trägerstruktur hat jedoch den Vorteil, dass die Lichtquelle und das Trägerelement zielgerichtet zueinander ausgerichtet werden können, um spezielle Muster oder Logos auf der Sichtseite zu erzeugen. Die Vielfalt der erzielbaren Lichteffekte kann hierdurch gesteigert werden.

Nach Maßgabe einer weiteren Ausführungsform umfasst die Lichtquelle zumindest eine RGB-LED. RGB-LEDs sind in vielen Fällen so aufgebaut, dass sie drei Leuchtdioden umfassen, von denen eine rotes Licht, eine grünes Licht und eine blaues Licht emittiert. Je nachdem, welche der LEDs Licht emittiert, erscheint das erzeugte Licht in einer bestimmten Farbe. Infolgedessen lassen sich auf einfache Weise eine Vielzahl von Farben mit der RGB-LED erzeugen und die Farben des Musters, welche auf der Sichtseite visuell wahrnehmbar ist, ändern.

Eine Ausbildung der Erfindung betrifft ein externes oder internes Verkleidungsbauteil für ein Personen- und/oder Gütertransportmittel, umfassend zumindest eine Beleuchtungsvorrichtung nach einer der vorherigen Ausführungsformen. Eine Ausgestaltung der Erfindung betrifft ein Personen- und/oder Gütertransportmittel, umfassend zumindest ein externes und/oder internes Verkleidungsbauteil nach der erwähnten Ausbildung.

Die technischen Effekte und Vorteile, die sich mit dem vorschlagsgemäßen externen oder internen Verkleidungsbauteil und dem Personen- und/oder Gütertransportmittel erreichen lassen, entsprechen denjenigen, die für die vorliegende Beleuchtungsvorrichtung erörtert worden sind. Zusammenfassend sei darauf hingewiesen, dass sich derartige Beleuchtungsvorrichtungen auf einfache Weise in beliebigen Bereichen des Personen- und/oder Gütertransportmittels anordnen lassen. Insbesondere können die Beleuchtungsvorrichtungen auch in Verkleidungsbauteile integriert werden, welche eine gewölbte Oberfläche aufweisen. Folglich können auch komplexe Muster und Logos in Bereichen erzeugt werden, in denen es bislang nicht oder nur mit unvertretbar hohem Aufwand möglich war.

Beispielhafte Ausführungsformen der Erfindung werden im Folgenden unter Bezugnahme auf die beigefügten Zeichnungen näher erläutert. Es zeigen
- Figur 1: eine prinzipielle und perspektivische Ansicht einer aus dem Stand der Technik bekannten Beleuchtungsvorrichtung,
- Figur 2A: eine prinzipielle und perspektivische Ansicht einer ersten Ausführungsform einer erfindungsgemäßen Beleuchtungsvorrichtung,
- Figur 2B: eine separate und nicht maßstäblich vergrößerte Schnittdarstellung durch einen Teil der in Figur 2A dargestellten Beleuchtungsvorrichtung,
- Figur 3A: eine prinzipielle und perspektivische Ansicht einer zweiten Ausführungsform einer erfindungsgemäßen Beleuchtungsvorrichtung,
- Figur 3B: eine separate und nicht maßstäblich vergrößerte Schnittdarstellung durch einen Teil der in Figur 3A dargestellten Beleuchtungsvorrichtung, und
- Figur 4: eine prinzipielle Darstellung eines Kraftfahrzeugs, welches mit einer erfindungsgemäßen Beleuchtungsvorrichtung ausgestattet ist.

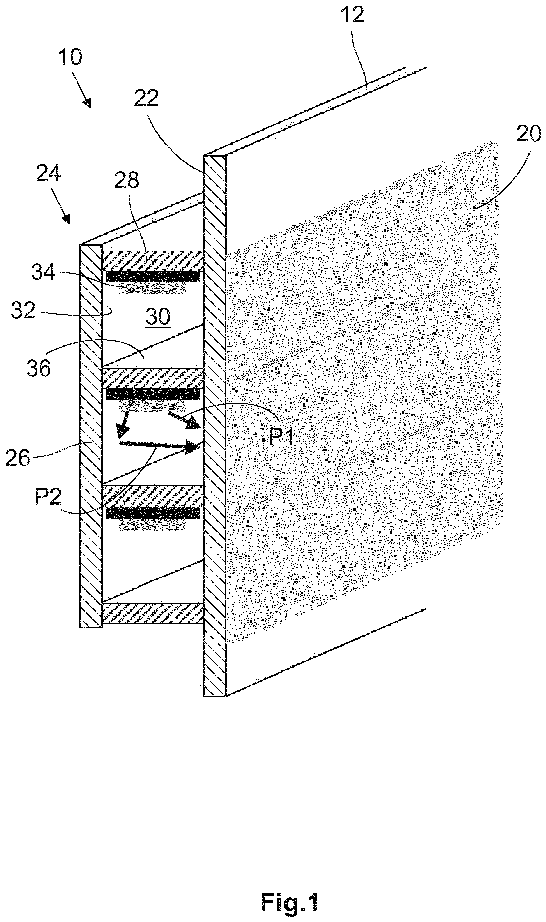

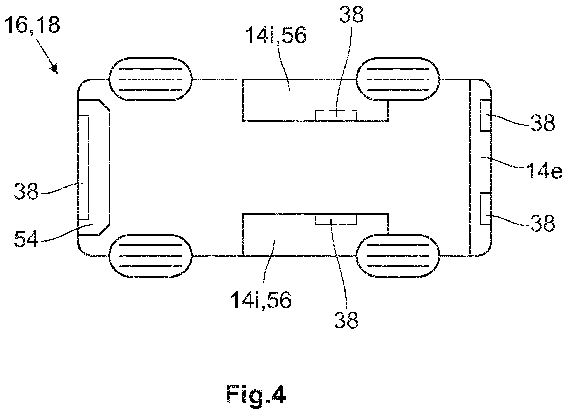

In Figur 1 ist ein Beispiel einer Beleuchtungsvorrichtung 10 nach dem Stand der Technik anhand einer prinzipiellen und perspektivischen Darstellung gezeigt. Die Beleuchtungsvorrichtung 10 umfasst ein Flächenelement 12, welches in ein externes oder internes Verkleidungsbauteil 14 eines Personen- und/oder Gütertransportmittels 16, insbesondere in Kraftfahrzeugen 18 (vgl. Figur 4), integriert werden kann. Es ist aber genauso gut möglich, die Beleuchtungsvorrichtung 10 als solche als ein Verkleidungsbauteil 14 zu verwenden, ohne dass die Beleuchtungsvorrichtung 10 in ein anderes Verkleidungsbauteil 14 integriert werden müsste.

Das Flächenelement 12 bildet eine Sichtseite 20, die für einen Betrachter visuell wahrnehmbar ist. Für den Fall, dass die Beleuchtungsvorrichtung 10 für ein internes Verkleidungsbauteil 14 verwendet wird oder dieses bildet, ist der Betrachter üblicherweise ein Fahrgast oder ein Fahrzeuginsasse, der sich im Innenraum des Personen- und/oder Gütertransportmittels 16 befindet. Für den Fall, dass die Beleuchtungsvorrichtung 10 für ein externes Verkleidungsbauteil 14 verwendet wird oder dieses bildet, ist die Sichtseite 20 für jede Person, die sich im näheren Umfeld des Personen- und/oder Gütertransportmittels 16 befindet, visuell wahrnehmbar.

Die Seite, welche der Sichtseite 20 gegenüberliegt, soll als Rückseite 22 des Flächenelements 12 bezeichnet werden. An der Rückseite 22 ist eine Trägerstruktur 24 angeordnet, welche im dargestellten Ausführungsbeispiel eine Rückwand 26 und insgesamt vier zwischen der Rückwand 26 und dem Flächenelement 12 angeordnete Zwischenwände 28 aufweist. Die Anzahl der Zwischenwände 28 kann weitgehend frei gewählt werden, wobei es sich anbietet, mindestens zwei Zwischenwände 28 vorzusehen. Während die Rückwand 26 parallel zum Flächenelement 12 verläuft, verlaufen die Zwischenwände 28 senkrecht zu diesen. Aufgrund dieser Anordnung entstehen im gezeigten Beispiel insgesamt drei Hohlräume 30.

Die zum Flächenelement 12 hinzeigende Fläche der Rückwand 26 ist als eine lichtreflektierende Fläche 32 ausgestaltet. Die lichtreflektierende Fläche 32 kann nach Art eines Spiegels ausgebildet sein. Alternativ kann sie mit einer hellen, insbesondere weißen Beschichtung versehen sein, die vorzugsweise besonders glatt ist.

In jedem der drei Hohlräume 30 ist jeweils eine Lichtquelle 34 angeordnet, um in den jeweiligen Hohlräumen 30 Licht bereitzustellen. Bei der dargestellten Beleuchtungsvorrichtung 10 ist die Lichtquelle 34 an den Zwischenwänden 28 befestigt, in diesem Fall nach Art einer Deckenbeleuchtung. Im bestimmungsgemä-ßen Gebrauch der Beleuchtungsvorrichtung 10 befindet sich somit die Lichtquelle 34 am oberen Ende der Hohlräume 30, wobei es genauso gut möglich ist, die Lichtquelle 34 am unteren Ende der Hohlräume 30 anzuordnen, so dass die Lichtquelle 34 nach Art einer Bodenbeleuchtung im Hohlraum 30 angeordnet ist. Darüber hinaus ist es auch möglich, an beiden Zwischenwänden eine Lichtquelle 34 anzubringen, so dass pro Hohlraum 30 zwei Lichtquellen 34 vorhanden sind.

Wenn im Folgenden von Lichtquelle 34 die Rede ist, so ist dies nicht so zu verstehen, dass nur eine einzige Lichtquelle 34 vorhanden ist. Vielmehr kann auch eine Vielzahl von diskreten Lichtquellen 34, beispielsweise eine Anzahl von Leuchtdioden, vorgesehen sein. Die Vielzahl von Lichtquellen 34 kann einer oder mehrerer Gruppen von Lichtquellen 34 zugeordnet werden.

Das von der Lichtquelle 34 ausgesendete Licht fällt zum einen direkt auf die Rückseite 22 des Flächenelements 12 (Strahlengang mit Pfeil P1 gekennzeichnet) und zum anderen auf die lichtreflektierende Fläche 32 (Strahlengang mit Pfeil P2 gekennzeichnet). Zudem trifft ein Teil des Lichts auf die der Lichtquelle 34 gegenüberliegende Oberfläche 36 der weiteren Zwischenwand 28 des betreffenden Hohlraums 30. Im dargestellten Beispiel ist jedoch diese Seite nicht reflektierend ausgestaltet, so dass dieser Teil des Lichts nicht näher betrachtet wird und vernachlässigt werden kann. Allerdings sei an dieser Stelle erwähnt, dass diese Oberfläche 36 ebenfalls reflektierend ausgestaltet werden kann, so dass der Teil des Lichts, der auf diese Oberfläche trifft, ebenfalls in erheblichem Umfang zum Flächenelement 12 hin reflektiert wird.

Wie aus der Figur 1 erkennbar, ist das Flächenelement 12 zumindest teilweise lichtdurchlässig, so dass zumindest ein Teil des Lichts, der auf die Rückseite 22 trifft, das Flächenelement 12 durchlaufen und an der Sichtseite 20 wieder aus dem Flächenelement 12 austreten kann. Wie aus der Figur 1 erkennbar, wird dadurch die Sichtseite 20 vergleichsweise homogen beleuchtet. Gut zu sehen ist ferner, dass dort, wo die Zwischenwände 28 und die Rückseite 22 des Flächenelements 12 aneinander anliegen, dunklere Abschnitte auf der Sichtseite 20 erzeugt werden.

Wie erwähnt, wird mit der in Figur 1 dargestellten Beleuchtungsvorrichtung 10 die Sichtseite 20 mehr oder weniger homogen beleuchtet, so dass es nicht möglich ist, besondere Leuchteffekte auf der Sichtseite 20 zu erzeugen. Insbesondere ist es nicht möglich, Muster oder Logos auf der Sichtseite 20 visuell wahrnehmbar darzustellen.

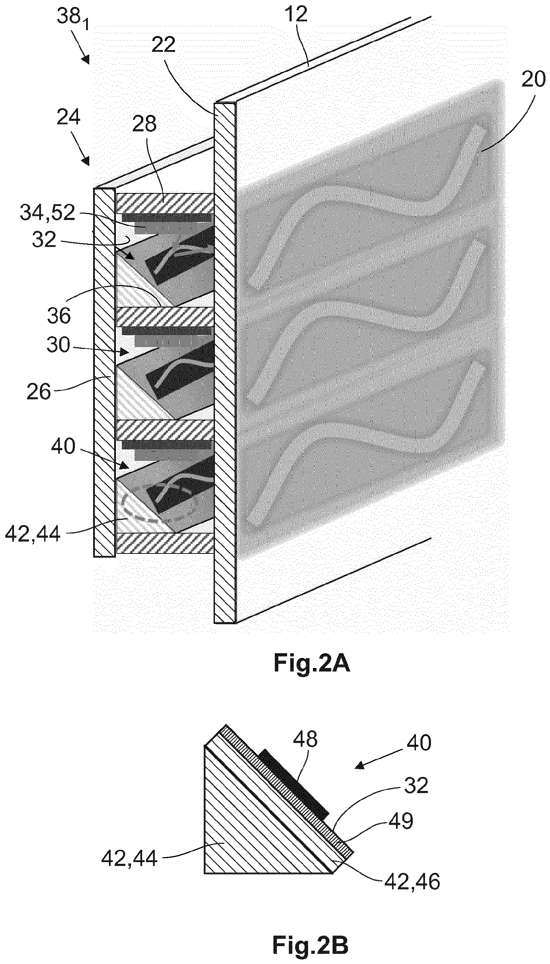

In den Figuren 2A und 2B ist ein erstes Ausführungsbeispiel einer erfindungsgemäßen Beleuchtungsvorrichtung 38₁ dargestellt, wobei die Figur 2A die Beleuchtungsvorrichtung 38₁ analog zu der in der Figur 1 gewählten Darstellung zeigt. Die Figur 2B zeigt einen nicht maßstäblich vergrößerten Ausschnitt der in Figur 2A dargestellten Beleuchtungsvorrichtung 38₁ nach dem ersten Ausführungsbeispiel. Der prinzipielle Aufbau der Beleuchtungsvorrichtung 38₁ nach dem ersten Ausführungsbeispiel entspricht weitgehend der in Figur 1 dargestellten Beleuchtungsvorrichtung 10, weshalb im Folgenden nur auf die wesentlichen Unterschiede eingegangen wird.

Die erfindungsgemäße Beleuchtungsvorrichtung 38₁ umfasst einen Muster-erzeugenden Abschnitt 40, der im dargestellten Ausführungsbeispiel der erfindungsgemäßen Beleuchtungsvorrichtung 38₁ auf einem Trägerelement 42 angeordnet ist. Das Trägerelement 42 umfasst einen im Querschnitt dreieckigen ersten Abschnitt 44 und einen im Querschnitt in etwa rechteckigen zweiten Abschnitt. Hierbei ist anzumerken, dass der zweite Abschnitt 46 in der Figur 2B aus Darstellungsgründen deutlich größer dargestellt ist als es in der Realität üblicherweise der Fall ist. Der zweite Abschnitt 46 kann auch weggelassen werden.

Der Muster-erzeugende Abschnitt 40 umfasst eine lichtabsorbierende Beschichtung 48, welche im dargestellten Ausführungsbeispiel auf die lichtreflektierende Fläche 32 aufgebracht ist, die vom Aufbau her der bereits für das in Figur 1 dargestellte Beispiel beschriebenen lichtreflektierenden Fläche 32 gleichen kann, die sich gemäß dem ersten Ausführungsbeispiel der erfindungsgemäßen Beleuchtungsvorrichtung 38₁ aber auf den Muster-erzeugenden Abschnitt 40 erstreckt. Die lichtreflektierende Fläche 32 ist im dargestellten Ausführungsbeispiel auf einer Zwischenschicht 49 angeordnet, die auf den zweiten Abschnitt 46 des Trägerelements 42 aufgebracht ist. Die Zwischenschicht 49 kann so gewählt werden, dass sich die lichtreflektierende Fläche 32 einfach fertigen und sich die lichtabsorbierende Beschichtung 48 gut aufbringen lässt.

Die lichtreflektierende Fläche 32 erstreckt sich auch auf die zum Flächenelement 12 hinzeigende Fläche der Rückwand 26, was aber nicht zwingend so sein muss.

Wie aus der Figur 2B hervorgeht, besteht die lichtabsorbierende Beschichtung 48 aus einer schwarzen Lackierung. Alternativ kann der Muster-erzeugende Abschnitt 40 auch anstelle der oder zusätzlich zur lichtabsorbierenden Beschichtung 48 eine lichtstreuende Beschichtung aufweisen, welche sich insbesondere durch eine sehr raue Oberfläche auszeichnet. Je nachdem, ob das Licht auf die lichtreflektierende Fläche 32, auf die lichtabsorbierende Beschichtung 48 oder auf die lichtstreuende Beschichtung trifft, wird auf unterschiedliche Weise auf das Licht eingewirkt:
Während das Licht, welche auf die lichtreflektierende Fläche 32 trifft, zu einem sehr großen Teil und gerichtet reflektiert wird, wird das Licht, welches auf die lichtabsorbierende Beschichtung 48 auftrifft, zum großen Teil dort absorbiert, so dass es so gut wie überhaupt nicht reflektiert wird. Für den Fall, dass der Muster-erzeugende Abschnitt 40 eine lichtstreuende Beschichtung aufweist, wird das hierauf auftreffende Licht in unterschiedliche Richtungen reflektiert.

Wie erwähnt, umfasst das Trägerelement 42 den im Querschnitt in etwa dreieckigen ersten Abschnitt 44, mit welchem der Muster-erzeugende Abschnitt 40 an der Trägerstruktur 24 befestigt ist. Im dargestellten ersten Ausführungsbeispiel der erfindungsgemäßen Beleuchtungsvorrichtung 10 ist der erste Abschnitt 44 des Trägerelements 42 einerseits an der Rückwand 26 und andererseits an einer der Zwischenwände 28 befestigt. Dabei ist das Trägerelement 42 so angeordnet, dass es auf derjenigen Oberfläche 36 der Zwischenwand 28 aufliegt, welche der Lichtquelle 34 gegenüberliegend angeordnet ist. Der mustererzeugende Abschnitt schließt in etwa einen Winkel von 45° mit der Zwischenwand 28 und der Rückwand 26 ein.

Aufgrund der Tatsache, dass das auf den Muster-erzeugenden Abschnitt 40 auftreffende Licht auf unterschiedliche Weise reflektiert wird, wird eine größere oder kleinere Lichtmenge zum Flächenelement 12 hin reflektiert, so dass auf der Sichtseite 20 Abschnitte mit unterschiedlicher Helligkeit erzeugt werden. Infolgedessen erscheint auf der Sichtseite 20 ein Muster, welches im dargestellten Ausführungsbeispiel einer Sinuskurve ähnelt.

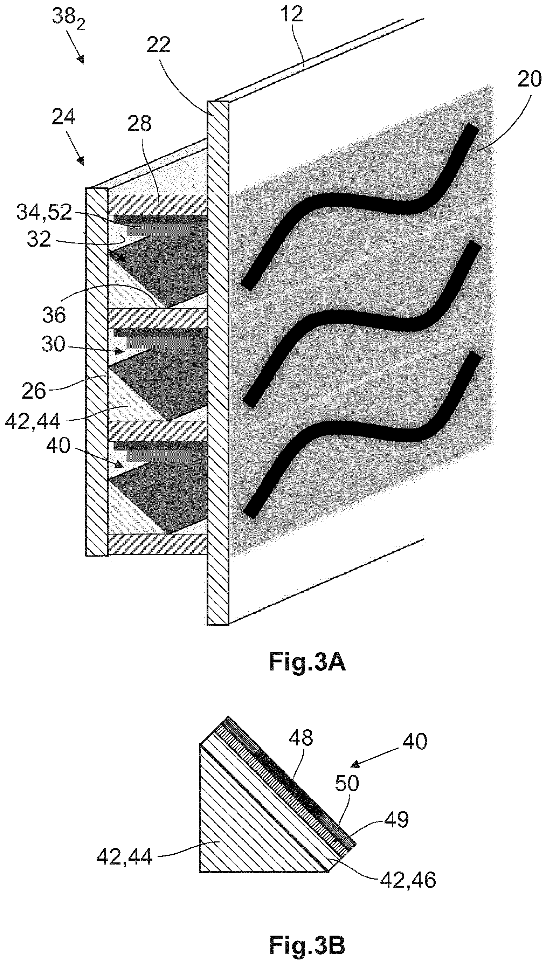

In den Figuren 3A und 3B ist ein zweites Ausführungsbeispiel der erfindungsgemäßen Beleuchtungsvorrichtung 38₂ dargestellt, wobei die gewählten Darstellungen denjenigen der Figur 2A und 2B entsprechen. Der wesentliche Unterschied zwischen der Beleuchtungsvorrichtung 38₁ nach dem ersten Ausführungsbeispiel und der Beleuchtungsvorrichtung 38₂ nach dem zweiten Ausführungsbeispiel liegt darin, dass der Muster-erzeugende Abschnitt 40 nicht nur die bereits für das erste Ausführungsbeispiel der erfindungsgemäßen Beleuchtungsvorrichtung 38₁ erwähnte lichtabsorbierende Beschichtung 48, sondern auch eine farbändernde Beschichtung 50 aufweist, welche auf die Zwischenschicht 49 aufgebracht ist. In diesem Fall umfasst der Muster-erzeugende Abschnitt 40 keine lichtreflektierende Fläche 32. Im zweiten Ausführungsbeispiel der erfindungsgemäßen Beleuchtungsvorrichtung 38₂ ist die lichtreflektierende Fläche 32 auf die Rückwand 26 beschränkt. Beim Auftreffen des Lichts auf die farbändernde Beschichtung 50 wird das Licht eines bestimmten Wellenlängenbereichs stärker absorbiert als das Licht eines anderen Wellenlängenbereichs. Infolgedessen weist das von der farbändernden Beschichtung 50 reflektierte Licht eine andere Farbe auf als das von der Lichtquelle 34 bereitgestellte Licht. Wie aus einem Vergleich der Figuren 2A und 3A hervorgeht, wird auf der Sichtseite 20 in beiden Fällen das einer Sinuskurve ähnelnde Muster erzeugt, allerdings unterscheiden sich die beiden Muster in ihren Farben.

Die Lichtquelle 34 kann als eine Leuchtdiode ausgestaltet sein, welche weißes Licht bereitstellt. Alternativ kann die Lichtquelle 34 aber auch als eine RGB-LED 52 ausgestaltet sein, welche üblicherweise drei Leuchtdioden umfasst, von denen die erste Leuchtdiode rotes Licht, die zweite grünes Licht und die dritte blaues Licht bereitstellt. Die verschiedenen Leuchtdioden der RGB-LED 52 können selektiv ein- und ausgeschaltet werden, wodurch zusätzliche Farben erzeugt werden können. Das auf der Sichtseite 20 erzeugte Muster erscheint in entsprechend anderen Farben.

In Figur 4 ist ein Personen- und/oder Gütertransportmittel 16 anhand einer prinzipiellen Draufsicht gezeigt, welches als ein Kraftfahrzeug 18 ausgeführt ist und insgesamt fünf der erfindungsgemäßen Beleuchtungsvorrichtungen 38 aufweist. Zwei der Beleuchtungsvorrichtungen 38 sind in einem externen Verkleidungsbauteil 14e angeordnet, welches hier als Stoßfänger ausgebildet ist. Eine dritte der Beleuchtungsvorrichtungen 38 ist in der Heckklappe 54 des Kraftfahrzeugs 18 angeordnet. Die äußere Oberfläche der Beleuchtungsvorrichtung 38 bildet dabei einen Teil der Oberfläche des externen Verkleidungsbauteils 14e oder der Heckklappe 54. Die äußere Oberfläche schließt sich nahtlos oder nahezu nahtlos an die umgebenden Oberflächen des Kraftfahrzeugs 18 an. Zwei weitere der erfindungsgemäßen Beleuchtungsvorrichtungen 38 sind jeweils an einem internen Verkleidungsbauteil 14i angeordnet, welche als eine Türverkleidung 56 dienen.

### Bezugszeichenliste

- 10: Beleuchtungsvorrichtung nach dem Stand der Technik
- 12: Flächenelement
- 14: Verkleidungsbauteil
- 14e: externes Verkleidungsbauteil
- 14i: internes Verkleidungsbauteil
- 16: Personen-und/oder Gütertransportmittel
- 18: Kraftfahrzeug
- 20: Sichtseite
- 22: Rückseite
- 24: Trägerstruktur
- 26: Rückwand
- 28: Zwischenwand
- 30: Hohlraum
- 32: lichtreflektierende Fläche
- 34: Lichtquelle
- 36: gegenüberliegende Oberfläche
- 38: Beleuchtungsvorrichtung
- 38₁, 38₂: Beleuchtungsvorrichtung
- 40: Muster-erzeugender Abschnitt
- 42: Trägerelement
- 44: erster Abschnitt
- 46: zweiter Abschnitt
- 48: lichtabsorbierende und/oder lichtstreuende Beschichtung
- 50: farbändernde Beschichtung
- 52: RGB-LED
- 54: Heckklappe
- 56: Türverkleidung

- P1: Pfeil
- P2: Pfeil

## Patentansprüche

1. Beleuchtungsvorrichtung (38) für ein externes oder internes Verkleidungsbauteil (14) eines Personen- und/oder Gütertransportmittels (16), umfassend
- ein in ein externes oder internes Verkleidungsbauteil (14) eines Personen- und/oder Gütertransportmittels (16) integriertes oder integrierbares oder das Verkleidungsbauteil (14) bildendes Flächenelement (12), welches zumindest einen Abschnitt einer Sichtseite (20) des Verkleidungsbauteils (14) bildet und welches zumindest teilweise lichtdurchlässig ist,
- eine an einer der Sichtseite (20) des Flächenelements (12) gegenüberliegenden Rückseite (22) angeordnete Trägerstruktur (24) mit zumindest einer lichtreflektierenden Fläche (32),
- zumindest eine Lichtquelle (34) zum Bereitstellen von Licht in der Beleuchtungsvorrichtung (38), wobei
o die lichtreflektierende Fläche (32) und die Lichtquelle (34) so ausgebildet und angeordnet sind, dass das Licht von der lichtreflektierenden Fläche (32) zum Flächenelement (12) reflektiert wird und auf der Sichtseite (20) visuell wahrnehmbar ist, und
- zumindest einen Muster-erzeugenden Abschnitt (40), der
o auf einem Trägerelement (42) angeordnet ist, welches mit der Trägerstruktur (24) verbunden ist, und
o das Licht insbesondere hinsichtlich der Helligkeit und/oder der Farbe derart zum Flächenelement (12) hin reflektiert, dass ein Muster auf der Sichtseite (20) visuell wahrnehmbar ist,
**dadurch gekennzeichnet, dass** die lichtreflektierende Fläche (32) auf dem Muster-erzeugenden Abschnitt (40) angeordnet ist, oder
**dadurch gekennzeichnet, dass** sich die lichtreflektierende Fläche (32) auf den Muster-erzeugenden Abschnitt (40) erstreckt , oder
**dadurch gekennzeichnet, dass** der Muster-erzeugende Abschnitt (40) keine lichtreflektierende Fläche (32) aufweist und der Muster-erzeugende Abschnitt (40) eine farbändernde Beschichtung (50) zum Ändern der Farbe des reflektierten Lichts umfasst.

2. Beleuchtungsvorrichtung (38) nach Anspruch 1,
**dadurch gekennzeichnet, dass** der Muster-erzeugende Abschnitt (40) eine lichtabsorbierende oder lichtstreuende Beschichtung (48) umfasst.

3. Beleuchtungsvorrichtung (38) nach einem der vorherigen Ansprüche,
**dadurch gekennzeichnet, dass** für den Fall, dass die lichtreflektierende Fläche (32) auf dem Muster-erzeugenden Abschnitt (40) angeordnet ist oder sich auf den Muster-erzeugenden Abschnitt (40) erstreckt, der Muster-erzeugende Abschnitt (40) eine farbändernde Beschichtung (50) zum Ändern der Farbe des reflektierten Lichts umfasst.

4. Beleuchtungsvorrichtung (38) nach einem der vorherigen Ansprüche,
**dadurch gekennzeichnet, dass** die zumindest eine Lichtquelle (34) an der Trägerstruktur (24) befestigt ist.

5. Beleuchtungsvorrichtung (38) nach einem der vorherigen Ansprüche,
**dadurch gekennzeichnet, dass** die Lichtquelle (34) zumindest eine RGB-LED (52) umfasst.

6. Externes oder internes Verkleidungsbauteil (14) für ein Personen- und/oder Gütertransportmittel (16), umfassend zumindest eine Beleuchtungsvorrichtung (38) nach einem der vorherigen Ansprüche.

7. Personen- und/oder Gütertransportmittel (16), umfassend zumindest ein externes und/oder internes Verkleidungsbauteil (14) nach Anspruch 6 und/oder zumindest eine Beleuchtungsvorrichtung (38) nach einem der Ansprüche 1 bis 5.

## Claims

1. Lighting apparatus (38) for an external or internal cladding component (14) of a means of passenger and/or freight transport (16), comprising
- a surface element (12), integrated in or integrable into an external or internal cladding component (14), or forming the cladding component (14), of a means of passenger and/or freight transport (16), which forms at least a section of a face side (20) of the cladding component (14), and which is at least partially light-permeable,
- a support structure (24), have at least one light-reflecting surface (32), arranged on a backside (22) of the surface element (12) opposite the face side (20)
- at least one light source (34) for providing light in the lighting apparatus (38), wherein
o the light-reflecting surface (32) and the light source (34) are implemented and arranged such that the light from the light-reflecting surface (32) is reflected to the surface element (12) and is visually perceptible on the face side (20), and
- at least one pattern-generating section (40) which
o is arranged on a support element (42) which is connected to the support structure (24), and
o reflects the light, in particular with regard to the brightness and/or the color, to the surface element (12) such that a pattern becomes visually perceptible on the face side (20),
**characterized in that** the light-reflecting surface (32) is arranged on the pattern-generating section (40),
or
**characterized in that** the light-reflecting surface (32) extends onto the patter-generating section (40),
or
**characterized in that** the pattern-generating section (40) does not comprise a light-reflecting surface (32) and **in that** the pattern-generating section (40) comprises a color-changing coating (50) for changing the color of the reflected light.

2. Lighting apparatus (38) in accordance with claim 1,
**characterized in that** the pattern-generating section (40) comprises a light-absorbing or light-diffusing coating (48).

3. Lighting apparatus (38) in accordance with any of the preceding claims,
**characterized in that**, for the case in which the light-reflecting surface (32) is arranged on the pattern-generating section (40) or extends onto the patter-generating section (40), the pattern-generating section (40) comprises a color-changing coating (50) for changing the color of the reflected light.

4. Lighting apparatus (38) in accordance with any of the preceding claims,
**characterized in that** the at least one light source (34) is attached to the support structure (24).

5. Lighting apparatus (38) in accordance with any of the preceding claims,
**characterized in that** the light source (34) comprises at least one RGB-LED (52).

6. External or internal cladding component (14) for a means of passenger and/or freight transport (16) comprising at least one lighting apparatus (38) in accordance with any of the preceding claims.

7. Means of passenger and/or freight transport (16) comprising at least one external or internal cladding component (14) in accordance with claim 6 and/or a lighting apparatus (38) in accordance with any of claims 1 to 5.

## Revendications

1. Dispositif d'éclairage (38) pour un composant d'habillage (14) externe ou interne d'un moyen de transport de personnes et/ou de marchandises (16) comprenant :
- un élément de surface (12) formant le composant d'habillage (14) ou intégré ou intégrable dans un composant d'habillage (14) externe ou interne d'un moyen de transport de personnes et/ou de marchandise (16), et qui forme au moins un segment du côté visible (20) du composant d'habillage (14) et qui est au moins partiellement transparent à la lumière,
- une structure portante (24) installée au dos (22) à l'opposé du côté visible (20) de l'élément de surface (12) et ayant au moins une surface photo-réfléchissante (32),
- au moins une source lumineuse (34) pour fournir la lumière dans le dispositif d'éclairage (38),
* la surface photo-réfléchissante (32) et la source lumineuse (34) sont réalisées et installées pour que la lumière soit réfléchie par la surface réfléchissante (32) vers l'élément de surface (12) et soit perceptible visuellement sur le côté visible (20), et
- au moins un segment (40) générant un motif qui,
* est installé sur un élément porteur (42) relié à la structure portante (24), et
* la lumière notamment pour la luminosité et/ou la couleur est réfléchie vers l'élément de surface (12) pour rendre perceptible visuellement un motif sur le côté visible (20),
**caractérisé en ce que**
la surface photo-réfléchissante (32) est sur le segment (40) générant le motif, ou
**caractérisé en ce que**
la surface photo-réfléchissante (32) s'étend sur le segment (40) générant le motif, ou
**caractérisé en ce que**
le segment (40) générant le motif ne comporte pas de surface photoréfléchissante (32) et le segment (40) générant le motif a un revêtement de couleur changeante (50) pour changer la couleur de la lumière réfléchie.

2. Dispositif d'éclairage (38) selon la revendication 1,
**caractérisé en ce que**
le segment (40) générant le motif comprend un revêtement (48) absorbant la lumière ou diffusant la lumière.

3. Dispositif d'éclairage (38) selon l'une des revendications précédentes,
**caractérisé en ce que**
au cas où la surface photo-réfléchissante (32) est sur le segment (40) générant le motif ou s'étend sur le segment (40) générant le motif, ce segment (40) générant le motif a un revêtement (50) changeant la couleur pour modifier la couleur de la lumière réfléchie.

4. Dispositif d'éclairage (38) selon l'une des revendications précédentes,
**caractérisé en ce que**
au moins la source lumineuse (34) est fixée à la structure portante (24).

5. Dispositif d'éclairage (38) selon l'une des revendications précédentes,
**caractérisé en ce que**
la source lumineuse (34) comprend au moins une Led-RGB (52).

6. Composant d'habillage (14) externe ou interne pour un moyen de transport de personnes et/ou de marchandises (16) comprenant au moins un dispositif d'éclairage (38) selon l'une des revendications précédentes.

7. Moyen de transport de personnes et/ou de marchandises (16) comprenant au moins un composant d'habillage (14) externe et/ou interne selon la revendication 6 et/ou au moins un dispositif d'éclairage (38) selon l'une des revendications 1 à 5.
